# EUROPEAN PATENT APPLICATION

(11) **EP 2 508 567 A1**
(43) Date of publication of application: **10.10.2012**
(21) Application number: 10834524.0
(22) Date of filing: 26.11.2010
(51) Int. Cl.: C08L 67/02, C08K 3/22, C08K 3/34, C08L 101/00

(54) **MOLDING MATERIAL HAVING VIBRATION-DAMPING PROPERTY AND MOLDED ARTICLE**

(30) Priority: 03.12.2009 JP 2009275791
(71) Applicant: Mitsubishi Gas Chemical Company, Inc., Tokyo 100-8324 (JP)
(72) Inventor: TIBA, Akifumi, Hiratsuka-shi Kanagawa 254-0016 (JP); YOSHINAKA, Satoshi, Hiratsuka-shi Kanagawa 254-0016 (JP)
(74) Representative: HOFFMANN EITLE
(86) International application number: PCT/JP2010/071086
(87) International publication number: WO 2011/068074

(57) **Abstract**

A molding material containing (α) a vibration damping material composed of a resin composition constituted of (X) a polyester resin composed of a dicarboxylic acid component constituent unit and a diol component constituent unit having (Y) titanium dioxide and (Z) a mica flake dispersed therein; and (β) a modifier for improving fluidity, wherein (1) in the polyester resin (X), a ratio of a total sum of a number (A₁) of the dicarboxylic acid component constituent unit having an odd carbon atom number in a main chain thereof and a number (B₁) of the diol component constituent unit having an odd carbon atom number in a main chain thereof to a total sum of a number (A₀) of all dicarboxylic acid component constituent units and a number (B₀) of all diol component constituent units, [(A₁ + B₁)/(A₀ + B₀)], is in the range of from 0.5 to 1.0; (2) in the vibration damping material (α), a mass ratio of the polyester resin (X), the titanium dioxide (Y) and the mica flake (Z), (X:Y:Z), is in the range of (15 to 40) : (5 to 30) : (30 to 80), and a specified modifier such as a polypropylene resin, etc. is used; and a molded article thereof, are provided.

## Description

### TECHNICAL FIELD

The present invention relates to a molding material having excellent vibration damping properties and exhibiting excellent molding processability, from which a molded article can be easily manufactured without requiring a complicated process such as lamination of a vibration damping material, etc., and relates to a molded article.

### BACKGROUND ART

Molding materials which are utilized for parts and housings of electric or electronic instruments such as personal computers, OA instruments, AV instruments, mobile phones, etc., optical instruments, precision instruments, toys, household or office electric appliances, and the like, and furthermore, parts of cars, airplanes, and ships are required to have vibration damping properties (properties of absorbing vibration energy) in addition to general material characteristics such as impact resistance, heat resistance, strength, dimensional stability, etc.
Though such vibration damping properties largely rely upon the shape of a molded article, they also rely upon elastic modulus or vibration damping properties of a material to be used. It is extremely difficult for a single material to satisfy all of such a lot of required performances. Therefore, molding materials which are allowed to have vibration damping properties by complexation of plural materials, for example, blending of various polymers, complexation of an organic material and an inorganic material, or lamination of different kinds of materials, are manufactured.
However, in particular, since the elastic modulus and the vibration damping properties are a contradict performance each other, in a molding material having vibration damping properties, it is necessary to combine a material having a high elastic modulus with a vibration damping material.

As materials absorbing vibration energy such as vibration damping materials, soft vinyl chloride based resins in which a plasticizer is added to a vinyl chloride based resin are conventionally known. In such a soft vinyl chloride based resin, in view of the matter that the vibration energy is consumed as a friction heat in the inside of the resin, it has been contrived to damp the vibration energy. However, the absorption or damping of the vibration energy is not sufficient yet.

Also, rubber materials such as a butyl rubber, an NBR butadiene acrylonitrile rubber, etc. are frequently used as a vibration damping material which is excellent from the standpoints of processability, mechanical strength, and material costs. Though such a rubber material exhibits the most excellent damping properties (transmission insulation performance or transmission relaxation performance of vibration energy) among general polymer materials, it is too low in the vibration damping properties for single use of a rubber material as a vibration damping material; and for example, in vibration isolation structures of buildings or instruments, the rubber material is used in a composite form such as a laminate in which the rubber material is laminated with a steel plate, or a vibration damping structure in which such a material is combined with a lead core or an oil damper for absorbing vibration energy upon plastic deformation.
As described above, such a rubber material as the vibration damping material cannot be used alone but is obliged to be made complex, and therefore, its vibration isolation structure becomes inevitably complicated. Thus, it is demanded to realize high vibration damping properties of a vibration damping material itself or a rubber material itself.

As vibration damping materials which are different from the foregoing soft vinyl chloride based resins or rubber materials, polyester resin compositions having a segment having an odd carbon number between ester bonds of a main chain are disclosed (Patent Documents 1 and 2). Such a polyester resin composition exhibits excellent vibration damping performance in the vicinity of room temperature and is a promising material as the vibration damping material. But, such a vibration damping material involves such a defect that the fluidity at the time of molding is so poor that it is difficultly utilized as a molding material. For that reason, for a method of laminating a vibration damping material, it is necessary to adopt a method such as sticking with an adhesive, a pressure sensitive adhesive or a pressure sensitive adhesive double coated tape, adhesion by lamination, coating or pressing, sticking of a self-adhesive vibration damping material, etc. , and the process becomes complicated, resulting in an increase of costs.

### PRIOR ART DOCUMENTS

### PATENT DOCUMENTS

Patent Document 1: JP-A-2006-052377
Patent Document 2: WO08/018444

### SUMMARY OF THE INVENTION

### PROBLEMS TO BE SOLVED BY THE INVENTION

In view of the foregoing circumstances, an object of the present invention is to provide a molding material exhibiting excellent vibration damping properties and moldability, from which a molded article is easily manufactured without requiring a complicated process such as lamination of a vibration damping material, etc., and a molded article.

### MEANS FOR SOLVING THE PROBLEMS

In order to achieve the foregoing object, the present inventors made extensive and intensive investigations. As a result, it has been found that when a vibration damping material composed of a polyester resin and a filler is mixed with a specified modifier for enhancing fluidity, the fluidity of the vibration damping material is enhanced, the moldability is improved, and a molded article having vibration damping properties is easily manufactured without requiring a complicated process such as lamination, etc., leading to accomplishment of the present invention.

That is, the present invention provides the following molding material and molded article.
[1] A molding material comprising (α) a vibration damping material composed of a resin composition constituted of (X) a polyester resin composed of a dicarboxylic acid component constituent unit and a diol component constituent unit having (Y) titanium dioxide and (Z) a mica flake dispersed therein; and (β) a modifier for improving fluidity, wherein
   (1) in the polyester resin (X), a ratio of a total sum of a number (A₁) of the dicarboxylic acid component constituent unit having an odd carbon atom number in a main chain thereof and a number (B₁) of the diol component constituent unit having an odd carbon atom number in a main chain thereof to a total sum of a number (A₀) of all dicarboxylic acid component constituent units and a number (B₀) of all diol component constituent units, [(A₁+B₁)/(A₀+ B₀)], is in the range of from 0.5 to 1.0;
   (2) in the vibration damping material (α), a mass ratio of the polyester resin (X), the titanium dioxide (Y) and the mica flake (Z), (X:Y:Z), is in the range of (15 to 40) : (5 to 30) : (30 to 80);
   (3) a content of the vibration damping material (α) is from 50 to 97 % by mass;
   (4) the modifier (β) for enhancing fluidity is at least one member selected from the group consisting of a polypropylene resin, a polyethylene resin, a polyisoprene resin, an ethylene-vinyl acetate copolymer resin, and a styrene-acrylonitrile copolymer resin; and
   (5) a melt flow rate as measured using a melt indexer under a condition at 200°C and at a load of 10 kg in an orifice diameter of 2 mm is in the range of from 400 to 10 g/10 min.
[2] The molding material as set forth above in [1], wherein the content of the vibration damping material (α) is from 90 to 97 % by mass.
[3] A molded article obtained by molding the molding material as set forth above in [1] or [2].

### EFFECTS OF THE INVENTION

Since the molding material of the present invention has excellent vibration damping properties and exhibits excellent molding processability, from which a molded article having vibration damping properties is easily manufactured without requiring a complicated process such as lamination, etc., it can be suitably used for areas where vibration occurs, as parts and housings of electric or electronic instruments, optical instruments, precision instruments, toys, household or office electric appliances, and the like, and furthermore, parts of cars, airplanes, ships, and the like.

### BEST MODES FOR CARRYING OUT THE INVENTION

The molding material of the present invention is one comprising (α) a vibration damping material composed of a resin composition constituted of (X) a polyester resin composed of a dicarboxylic acid component constituent unit and a diol component constituent unit having (Y) titanium dioxide and (Z) a mica flake dispersed therein; and (β) a modifier for improving fluidity.
First of all, the polyester resin (X) in the vibration damping material (α) is composed of a dicarboxylic acid component constituent unit and a diol component constituent unit, and a ratio of a total sum of a number (A₁) of the dicarboxylic acid component constituent unit having an odd carbon atom number in a main chain thereof and a number (B₁) of the diol component constituent unit having an odd carbon atom number in a main chain thereof to a total sum of a number (A₀) of all dicarboxylic acid component constituent units and a number (B₀) of all diol component constituent units, [(A₁ +B₁)/(A₀ +B₀)], is in the range of from 0.5 to 1.0.
The "carbon atom number in a main chain of the dicarboxylic acid component constituent unit (or the diol component constituent unit)" as referred to herein means a number of carbon atoms existing on the shortest route along the main chain of the polyester resin in a monomer unit sandwiched between one ester bond [-C(=O) -O-] and a next ester bond. Incidentally, the constituent unit number of each component can be calculated from a ratio of integrated values of results of ¹H-NMR spectral measurement as described later.

In the vibration damping material (α), a ratio of a total sum of a number (A₁) of the dicarboxylic acid component constituent unit having an odd carbon atom number in a main chain thereof and a number (B₁) of the diol component constituent unit having an odd carbon atom number in a main chain thereof to a total sum of a number (A₀) of all dicarboxylic acid component constituent units and a number (B₀) of all diol component constituent units, [(A₁ + B₁)/(A₀ + B₀)], is in the range of from 0.5 to 1.0, and preferably in the range of from 0.7 to 1.0. Incidentally, in the polyester resin (X), each of the carbon atom number in the main chain of the dicarboxylic acid component constituent unit and the carbon atom number in the main chain of the diol component constituent unit is preferably 1, 3, 5, 7, or 9.

Examples of the dicarboxylic acid component constituent unit in which the carbon atom number in the main chain of the polyester resin (X) is an odd number include constituent units derived from isophthalic acid, malonic acid, glutaric acid, pimelic acid, azelaic acid, undecane diacid, brassylic acid, 1,3-cyclohexanedicarboxylic acid, and the like. Above all, constituent units derived from isophthalic acid, azelaic acid, and 1,3-cyclohexanedicarboxylic acid are preferable, and a constituent unit derived from isophthalic acid is more preferable.
Incidentally, the polyester resin (X) may contain one kind or two or more kinds of constituent units derived from the foregoing dicarboxylic acids. Also, when two or more kinds of constituent units are contained, it is preferable that constituent units derived from isophthalic acid and azelaic acid are contained.

Examples of the diol component constituent unit in which the carbon atom number in the main chain of the polyester resin (X) is an odd number include constituent units derived from 1,3-propanediol, 1,3-butanediol, 2-methyl-1,3-propanediol, 1,3-pentanediol, 1-methyl-1,3-butanediol, 2-methyl-1,3-butanediol, neopentyl glycol, 1,3-hexanediol, 3-methyl-1,3-butanediol, 1,5-pentanediol, 2-methyl-1,5-pentanediol, 3-methyl-1,5-pentanediol, 1,5-hexanediol, 2-ethyl-1,5-pentanediol, 2-propyl-1,5-pentanediol, m-xylene glycol, 1,3-cyclohexanediol, 1,3-bis(hydroxymethyl)cyclohexane, and the like. Above all, constituent units derived from 1,3-propanediol, 1,3-butanediol, 2-methyl-1,3-propanediol, neopentyl glycol, 1,5-pentanediol, m-xylene glycol, and 1,3-cyclohexanediol are preferable, and constituent units derived from 1,3-propanediol, 1,5-pentanediol, 2-methyl-1,3-propanediol, 1,3-butanediol, and neopentyl glycol are more preferable.
Incidentally, the polyester resin (X) may contain one kind or two or more kinds of constituent units derived from the foregoing diols.

In the vibration damping material (α), a ratio (A₁/A₀) of the number (A₁) of the dicarboxylic acid component constituent unit having odd carbon atom number in a main chain thereof to the number (A₀) of all dicarboxylic acid component constituent units in the polyester resin (X) is preferably in the range of from 0.5 to 1.0, and the subject ratio (A₁/A₀) is more preferably in the range of from 0.7 to 1.0.
Also, in the vibration damping material (α), a ratio (B₁/B₀) of the number (B₁) of the constituent unit derived from a diol to the number (B₀) of all diol component constituent units in the polyester resin (X) is preferably in the range of from 0.5 to 1.0, and the subject ratio (B₁/B₀) is more preferably in the range of from 0.7 to 1.0.

In the polyester resin (X) in the vibration damping material (α), it is preferable that (1) an intrinsic viscosity as measured at 25°C in a trichloroethane/phenol mixed solvent in a mass ratio of 40/60 is from 0.2 to 2.0 dL/g; and that (2) a quantity of heat of crystallization exothermic peak on temperature falling as measured by a differential scanning calorimeter is not more than 5 J/g. When the foregoing (1) and (2) are satisfied, higher vibration damping properties can be obtained.

Incidentally, the polyester resin (X) in the vibration damping material (α) may contain, in addition to the foregoing dicarboxylic acid component constituent unit and diol component constituent unit, other constituent units to an extent that the effects of the present invention are not impaired. Its kind is not particularly limited, and constituent units derived from all dicarboxylic acids and esters thereof (hereinafter referred to as "other dicarboxylic acids"), diols (hereinafter referred to as "other diols"), or hydroxycarboxylic acids and esters thereof (hereinafter referred to as "hydroxycarboxylic acids"), each of which is able to form a polyester resin, can be contained.

Examples of other dicarboxylic acids include dicarboxylic acids or dicarboxylic acid esters such as terephthalic acid, o-phthalic acid, 2-methylterephthalic acid, 2,6-naphthalenedicarboxylic acid, succinic acid, adipic acid, suberic acid, sebacic acid, dodecane diacid, 1,4-cyclohexanedicarboxylic acid, decalindicarboxylic acid, norbornanedicarboxylic acid, tricyclodecanedicarboxylic acid, pentacyclododecanedicarboxylic acid, isophoronedicarboxylic acid,
3,9-bis(2-carboxyethyl)-2,4,8,10-tetraoxaspiro[5.5]undecan e, etc.; and tri- or higher valent carboxylic acids such as trimellitic acid, trimesic acid, pyromellitic acid, tricarballylic acid, etc., or derivatives thereof.

Also, examples of other diols include aliphatic diols such as ethylene glycol, 1,2-propylene glycol, 2-methyl-1,2-propanediol, 1,4-butanediol, 1,6-hexanediol, 2,5-hexanediol, diethylene glycol, triethylene glycol, etc.; polyether compounds such as polyethylene glycol, polypropylene glycol, polybutylene glycol, etc.; tri- or higher hydric alcohols such as glycerin, trimethylolpropane, pentaerythritol, etc.; alicyclic diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol, 5-methylol-5-ethyl-2-(1,1-dimethyl-2-hydroxyethyl)-1,3-dio xane, pentacyclododecanedimethanol, 3,9-bis(1,1-dimethyl-2-hydroxyethyl)-2,4,8,10-tetraoxaspir o[5.5]undecane, etc.; alkylene oxide adducts of a bisphenol such as 4,4'-(1-methylethylidene)bisphenol, methylenebisphenol (bisphenol F), 4,4'-cyclohexylidenebisphenol (bisphenol Z), 4,4'-sulfonylbisphenol (bisphenol S), etc.; alkylene oxide adducts of an aromatic dihydroxy compound such as hydroquinone, resorcin, 4,4'-dihydroxybiphenyl, 4,4'-dihydroxydiphenyl ether, 4,4'-dihydroxydiphenyl benzophenone, etc., and so on.

Examples of hydroxycarboxylic acids include hydroxybenzoic acid, dihydroxybenzoic acid, hydroxyisophthalic acid, hydroxyacetic acid, 2,4-dihydroxyacetophenone, 2-hydroxyhexadecanoic acid, 12-hydroxystearic acid, 4-hydroxyphthalic acid, 4,4'-bis(p-hydroxyhenyl)pentanoic acid, 3,4-dihydroxycinnamic acid, and so on.

A method for manufacturing the polyester resin (X) which is used for the vibration damping material (α) is not particularly limited, and conventionally known methods can be applied. In general, the polyester resin (X) can be manufactured by polycondensation of monomers as raw materials. For example, there can be exemplified a melt polymerization method or a solution polymerization method such as an ester exchange method, a direct esterification method, etc.
As for an ester exchange catalyst, an esterification catalyst, an etherification inhibitor, a polymerization catalyst, a stabilizer of every sort, such as a heat stabilizer, a light stabilizer, etc., a polymerization modifier, and the like, which are used in such a melt polymerization method or solution polymerization method, those which are conventionally known can be used.
Examples of the ester exchange catalyst include compounds containing a metal such as manganese, cobalt, zinc, titanium, calcium, etc.; examples of the esterification catalyst include compounds containing a metal such as manganese, cobalt, zinc, titanium, calcium, etc.; and examples of the etherification inhibitor include amine compounds and so on. Examples of the polycondensation catalyst include compounds containing a metal such as germanium, antimony, tin, titanium, etc., for example, germanium(IV) oxide, antimony(III) oxide, triphenylstibine, antimony(III) acetate; tin(II) oxide, and titanates such as titanium(IV) tetrabutoxide, titanium(IV) tetraisopropoxide, titanium(IV) bis(acetylacetonato)diisopropoxide, etc. Also, it is effective to add, as a heat stabilizer, a phosphorus compound of every sort, such as phosphoric acid, phosphorous acid, phenylphosphonic acid, etc. In addition, a light stabilizer, an antistatic agent, a lubricant, an antioxidant, a mold release agent, or the like may be added.
Incidentally, as the dicarboxylic acid component which serves as a raw material, in addition to the dicarboxylic acids from which the foregoing dicarboxylic acid component constituent unit is derived, dicarboxylic acid derivatives such as dicarboxylic acid esters, dicarboxylic acid chlorides, active acyl derivatives, and dinitriles thereof, and the like can also be used.

In the vibration damping material (α) which is used for the molding material of the present invention, for the purpose of enhancing the absorption of vibration energy, the polyester resin (X) is filled with (Y) titanium dioxide and (Z) a mica flake.
A form of the titanium oxide (Y) to be dispersed in the polyester resin (X) is not particularly limited, and titanium oxide including only a rutile type or only an anatase type, and titanium dioxide having a rutile type and a anatase type mixed therein can be used. Also, examples of a surface coating treatment agent for inhibiting photo-catalytic activity which titanium dioxide has include surface treatment agents such as aluminum oxide, silicon oxide, zirconium oxide, zinc oxide, etc. Also, titanium dioxide which is allowed to have electrical conductivity upon containing an electrically conductive powder can be used for the vibration damping material of the present invention. The titanium dioxide (Y) is suitably one having an average particle size (volume average particle size), as determined by the laser diffraction method, of from 0.01 to 0.5 µm. In the present invention, in particular, by using titanium dioxide, a molding material having high vibration damping performance is obtained.
Though the kind of the mica flake (Z) to be dispersed in the polyester resin (X) is not particularly limited, white mica that is flaky mica having a high vibration energy absorbing effect is preferable. Also, since the dispersed mica is easily oriented in the inside of the vibration damping material, one in which an average particle size of the mica in the vibration damping material of the present invention is from 25 to 500 µm is suitable.

In the vibration damping material (α) which is used for the molding material of the present invention, a mass ratio of the polyester resin (X), the titanium dioxide (Y) and the mica flake (Z), (X:Y:Z), is in the range of (15 to 40):(5 to 30) : (30 to 80), and preferably in the range of (15 to 25) : (15 to 25) : (50 to 70).
In the vibration damping material (α), when the subject mass ratio of the polyester resin (X) is less than 15, there is a concern that the effect for enhancing vibration damping properties by the titanium dioxide and the mica flake are not thoroughly obtained, so that the moldability is lost. When the subject mass ratio exceeds 40, the titanium dioxide and the mica flake cannot be dispersed in contents at which the effect for enhancing vibration damping properties is conspicuously revealed.
Also, in the vibration damping material (α), when the subject mass ratio of the titanium dioxide (Y) is less than 5, the effect for enhancing vibration damping properties by the titanium dioxide is not obtained, whereas when the subject mass ratio of the titanium dioxide (Y) exceeds 30, considering that the content of the titanium dioxide is large, the vibration damping properties are not so enhanced.
Furthermore, in the vibration damping material (α), when the subject mass ratio of the mica flake (Z) is less than 30, the effect for enhancing vibration damping properties is not obtained, whereas when the subject mass ratio exceeds 80, there is a concern that a more enhancement of the vibration damping properties due to an increase of the mica content is not substantially revealed, so that the moldability is lost.

Though the vibration damping material (α) which is used for the molding material of the present invention is obtained by mixing the polyester resin (X), the titanium dioxide (Y), and the mica flake (Z), an already-known method can be adopted as the mixing method. Examples thereof include a method for performing melt mixing using an apparatus such as a heat roll, a Banbury mixer, a twin-screw kneader, an extruder, etc. In addition, a method in which the polyester resin is dissolved in or swollen with a solvent, and the titanium dioxide and the mica flake are mixed therein, followed by drying, a method in which the respective components are mixed in a fine powder form, and the like can also be adopted. Incidentally, there is no particular limitation with respect to the addition method and addition order of the titanium dioxide, mica flake, and additives, etc., and the like.

Next, examples of the modifier (β) for enhancing the fluidity, which is contained in the molding material of the present invention, include a thermoplastic resin and a lubricant.
At least one member selected from the group consisting of a polyethylene resin, a polypropylene resin, a polyisoprene resin, an ethylene-vinyl acetate copolymer resin, and a styrene-acrylonitrile copolymer resin is used as the thermoplastic resin. Above all, a polyethylene resin and a polypropylene resin are more preferable, and a polypropylene resin is especially preferable. Incidentally, such a thermoplastic resin can also be converted into a thermoplastic resin reinforced with glass fibers, carbon fibers, or the like.
Examples of the lubricant include a polyolefin based wax such as a polyethylene wax, an oxidized polyethylene wax, a fluorine-modified polyethylene wax, a polypropylene wax, an oxidized polypropylene wax, a vinyl acetate-ethylene copolymer wax, etc., an organosilicone wax, a higher fatty acid ester wax, a carnauba wax, a montanic acid ester wax, zinc stearate, calcium stearate, magnesium stearate, and so on. However, it should not be construed that the lubricant is limited thereto. In particular, a montanic acid ester max is preferable. The modifier may be a single kind or in admixture of two or more kinds thereof.

When a content proportion of the vibration damping material (α) in the molding material is high, though the vibration damping properties also become high, the fluidity is lowered. In particular, in the case where the content proportion of the vibration damping material (α) is from 50 to 97 % by mass, the vibration damping properties and the fluidity and mold release properties are well balanced, and the moldability becomes good. The content proportion of the vibration damping material (α) is preferably from 90 to 97 % by mass, and more preferably from 94 to 97 % by mass.
Also, a melt flow rate of the molding material of the present invention, as measured using a melt indexer under a condition at 200 °C and at a load of 10 kg in an orifice diameter of 2 mm, is from 400 to 10 g/10 min, and preferably from 150 to 10 g/10 min.

The molding material of the present invention comprises (α) a vibration damping material composed of a resin composition constituted of (X) a polyester resin having (Y) titanium dioxide and (Z) a mica flake dispersed therein and (β) a modifier for improving fluidity. If desired, one or more additives, for example, a dispersant, a compatibilizer, a surfactant, an antistatic agent, a plasticizer, a flame retardant, a crosslinking agent, an antioxidant, an anti-aging agent, a weather-resisting agent, a heat-resisting agent, a processing aid, a brightener, a colorant (e.g., a pigment or a dye), a foaming agent, a foaming aid, an electrically conductive material, an inorganic filler, etc. can be added within the range where the effects of the present invention are not impaired.

The molding material of the present invention can be obtained by mixing the vibration damping material (α) composed of a resin composition constituted of the polyester resin (X) having the titanium dioxide (Y) and the mica flake (Z) dispersed therein and the modifier (β) for improving fluidity and further mixing other additives as the need arises. An already-known method can be adopted as the mixing method. Examples thereof include a method for performing melt mixing using an apparatus such as a heat roll, a Banbury mixer, a twin-screw kneader, an extruder, etc. Incidentally, there is no particular limitation with respect to the addition method and addition order of other additives, etc., and the like.

The molded article of the present invention is obtained by molding the foregoing molding material; and though injection molding is preferable, the molded article of the present invention may also be obtained by other already-known method such as extrusion molding, press molding, etc. The molded article of the present invention can be suitably utilized for parts and housings of electric or electronic instruments such as personal computers, OA instruments, AV instruments, mobile phones, etc., optical instruments, precision instruments, toys, household or office electric appliances, and the like, and furthermore, parts of cars, airplanes, and ships, and the like. The molded article of the present invention is easily manufactured without requiring a complicated process such as lamination of the vibration damping material, etc. and is able to exhibit excellent vibration damping properties.

### EXAMPLES

Examples are hereunder described, but it should not be construed that the present invention is limited to the following Examples.
Incidentally, the polyester resin (X) and the molding material obtained in each of the Examples and Comparative Examples were evaluated in the following methods.

### (1) Molar ratio of each of constituent units of polyester resin (X): [(A₁ + B₁)/(A₀ + B₀), (A₁/A₀), and (B₁/B₀)

The molar ratio was calculated from a ratio of integrated values of results of 400 MHz-¹H-NMR spectral measurement.

### (2) Intrinsic viscosity ([η]) of polyester resin (X)

The polyester resin was dissolved in a trichloroethane/phenol mixed solvent (mass ratio: 40/60) and held at 25 °C, and the intrinsic viscosity was measured using a Cannon-Fenske viscometer.

### (3) Quantity of heat (ΔHc) of crystallization exothermic peak on temperature falling of polyester resin (X)

The quantity of heat was measured using a DSC/TA-50WS Model differential scanning calorimeter, manufactured by Shimadzu Corporation. About 10 mg of a sample was charged in an aluminum-made non-closed container, and the temperature was increased to 280 °C in a nitrogen gas stream (30 mL/min) at a temperature rise rate of 20 °C/min. After holding the sample at 280 °C for one minute, the temperature was allowed to fall at a temperature falling rate of 10 °C/min, and the quantity of heat was determined from an area of an exothermic peak appearing during the temperature falling.

### (4) Loss factor of molding material

A molding material obtained in each of the Examples and Comparative Examples was formed into a sheet having a thickness of about 1 mm by means hot pressing at 200 °C, which was then cut out in a size of 10 mm x 150 mm to form a specimen.
The specimen was allowed to adhere onto a substrate (aluminum alloy 5022 material) having a thickness of 1 mm by heat pressure bonding by means of heat pressing or with a two-part curing type epoxy based adhesive (a trade name: CEMEDINE SG-EPO, EP008, manufactured by Cemedine Co., Ltd.), thereby fabricating an unconstrained vibration damping material.
The obtained unconstrained vibration damping material was measured for a loss factor at a 500 Hz anti-resonance point under a condition at a measurement temperature of 20 °C by the central exiting method by a loss factor tester (manufactured by Ono Sokki Co., Ltd.). Incidentally, the larger the loss factor, the higher the vibration damping properties.
Incidentally, the symbol "*1" in the tables means that the vibration damping material (α) was not sufficiently melted at a temperature not higher than the decomposition temperature and caused defective dispersion, so that the measurement could not be achieved.

### (5) Fluidity of molding material

A melt flow rate was measured using a melt indexer (melt indexer TYPE C-5059D, manufactured by Toyo Seiki Seisaku-sho, Ltd.) under a condition at 200 °C and at a load of 10 kg in an orifice diameter of 2 mm. Incidentally, the higher the melt flow rate, the higher the fluidity.

Incidentally, the symbol "*2" in the tables means that the molding material did not flow under the measurement condition, so that the measurement could not be achieved.

### (6) Moldability of molding material

When the molding material was molded using an injection molding machine (SE130DU-HP, manufactured by Sumitomo Heavy Industries, Ltd.), the moldability was evaluated by observing a shape of a molded article and whether the molding release properties from a die were good or bad.

Incidentally the case where both the shape of a molded article and the mold release properties from a die were good is designated as "A"; the case where the shape of a molded article were good, and the mold release properties from a die were bad, or the case where the mold release properties from a die were good, and the shape of a molded article was bad is designated as "B"; and the case where both the shape of a molded article and the mold release properties from a die were bad is designated as "C".

Incidentally, the symbol "*3" in the tables means that the vibration damping material (α) was not sufficiently melted at a temperature not higher than the decomposition temperature and caused defective dispersion, so that the measurement could not be achieved.

### Manufacturing Example 1 (Manufacture of Polyester Resin X1)

In a polyester manufacturing apparatus having an internal volume of 30 liters (L), which were equipped with a packed column type rectifier, an agitating blade, a partial condenser, a total condenser, a cold trap, a thermometer, a heating apparatus, and a nitrogen-introducing tube, 9,950 g (60.3 moles) of isophthalic acid (manufactured by AG International Chemical Co., Ltd.), 5,376 g (29.7 moles) of azelaic acid (a trade name: EMEROX 1144, manufactured by Cognis Corporation, content of azelaic acid: 93.3 % by mole, total sum of dicarboxylic acids: 99.97 %), and 14,600 g (162 moles) of 2-methyl-1,3-propanediol (manufactured by Dairen Chemical Corporation) were added, the temperature was increased to 225 °C at atmospheric pressure in a nitrogen atmosphere, and an esterification reaction was carried out for 3.0 hours. After a conversion rate of reaction of isophthalic acid and azelaic acid reached 85 % by mole or more while monitoring the amount of condensed water to be distilled off, 14.3 g of a titanium (IV) tetrabutoxide monomer (manufactured by Wako Pure Chemical Industries, Ltd.) (a concentration of titanium relative to the total mass of initial condensation reaction product obtained by subtracting the mass of condensed water from the total mass of charged raw materials was 70.5 ppm) was added; temperature increase and pressure reduction were gradually carried out; and a polycondensation reaction was finally carried out at 240 to 250 °C under not more than 0.4 kPa while discharging the 2-methyl-1,3-propanediol out the system. A viscosity of the reaction mixture and an agitation torque value gradually increased, and at a point of time when the viscosity became appropriate, or at a point of time when the distillation of 2-methyl-1,3-propanediol stopped, the reaction was completed.
The properties of the obtained Polyester Resin X1 were [η]=0.71 (dL/g), ΔHc = 0 (J/g), and ¹H-NMR [400 MHz, CDCl₃, internal standard TMS: δ (ppm) = 7.5 to 8.9 (Ph-H, 4H); 3.5 to 4.6 (-CH₂-CH(CH₃)-CH₂-, 6H); 1.0 to 2.6 (-CH₂CH(CH₃)CH₂-, -CH₂CH (CH₃) CH₂-, -CO (CH₂)₇CO-, 13H)].
A ratio of the dicarboxylic acid component constituent unit and the diol component constituent unit of this Polyester Resin X1 is (A₁ + B₁)/(A₀ + B₀) = 1.0, (A₁/A₀) = 1.0, and (B₁/B₀) = 1.0.

### Comparative Example 1 (Manufacture of Vibration Damping Material α1)

22.2 % by mass of Polyester Resin X1 obtained in Manufacturing Example 1, 17.5 % by mass of a titanium oxide powder (a trade name: TIPAKE CR-80, manufactured by Ishihara Sangyo Kaisha, Ltd.), 60 % by mass of a mica flake (a trade name: CS-060DC, manufactured by Yamaguchi Mica Co., Ltd.), and 0.3 % by mass of a carbon powder (Ketjen Black EC, manufactured by Ketjen Black International Company) were kneaded at 200 °C using a twin-screw kneader, thereby obtaining Vibration Damping Material α1. Results of physical property measurement of the obtained Vibration Damping Material α1 are shown in Table 1. Incidentally, the Vibration Damping Material α1 did not flow, so that a melt flow rate thereof could not be measured.

### Examples 1 to 4

The Vibration Damping Material α1 obtained in Comparative Example 1 and polypropylene (a trade name: NOVATEC PP-MG03B, manufactured by Nippon Polypropylene Corporation) were mixed in a ratio shown in Table 1, thereby obtaining molding materials. Results of physical property measurement of the obtained molding materials are shown in Table 1.

**Table 1**

| | | | Comparative Example 1 | Example 1 | Example 2 | Example 3 | Example 4 |
|---|---|---|---|---|---|---|---|
| Composition of Vibration Damping Material α1 (% by mass) | | | | | | | |
| | Polyester resin (X) | | 22.2 | 22.2 | 22.2 | 22.2 | 22.2 |
| | Titanium oxide (Y) | | 17.5 | 17.5 | 17.5 | 17.5 | 17.5 |
| | Mica flake (Z) | | 60.0 | 60.0 | 60.0 | 60.0 | 60.0 |
| | Carbon powder | | 0.3 | 0.3 | 0.3 | 0.3 | 0.3 |

| Composition of molding material (% by mass) | | | | | | | |
|---|---|---|---|---|---|---|---|
| | Vibration Damping Material α1 | | 100 | 70 | 95 | 96 | 97 |
| | Modifier | | | | | | |
| | | Polypropylene (MG03B) | 0 | 30 | 5 | 4 | 3 |

| Physical properties of molding material | | | | | | | |
|---|---|---|---|---|---|---|---|
| | Loss factor η (20 °C) | | 0.257 | 0.143 | 0.242 | 0.235 | 0.243 |
| | Melt flow rate (g/10 min) | | *2 | 296 | 58 | 35 | 13 |
| | Moldability | | C | A | A | A | A |

### Comparative Example 2 (manufacture of Vibration Damping Material a1)

36.0 % by mass of Polyester Resin X1, 60 % by mass of a mica flake (a trade name: CS-060DC, manufactured by Yamaguchi Mica Co., Ltd.), and 4.0 % by mass of a carbon powder (Ketjen Black EC, manufactured by Ketj en Black International Company) were kneaded at 200 °C using a twin-screw kneader, thereby obtaining Vibration Damping Material a1.

### Comparative Examples 3 to 6

The Vibration Damping Material a1 obtained in Comparative Example 2 and polypropylene (a trade name: NOVATEC PP-MG03B, manufactured by Nippon Polypropylene Corporation) were mixed in a ratio shown in Table 2, thereby obtaining molding materials. Results of physical property measurement of the obtained molding materials are shown in Table 2.

**Table 2**

| | | | Comparative Example 2 | Comparative Example 3 | Comparative Example 4 | Comparative Example 5 | Comparative Example 6 |
|---|---|---|---|---|---|---|---|
| Composition of Vibration Damping Material α1 (% by mass) | | | | | | | |
| | Polyester resin (X) | | 36.0 | 36.0 | 36.0 | 36.0 | 36.0 |
| | Titanium oxide (Y) | | 0 | 0 | 0 | 0 | 0 |
| | Mica flake (Z) | | 60.0 | 60.0 | 60.0 | 60.0 | 60.0 |
| | Carbon powder | | 4.0 | 4.0 | 4.0 | 4.0 | 4.0 |

| Composition of molding material (% by mass) | | | | | | | |
|---|---|---|---|---|---|---|---|
| | Vibration Damping Material a1 | | 100 | 90 | 93 | 95 | 97 |
| | Modifier | | | | | | |
| | | Polypropylene (MG03B) | 0 | 10 | 7 | 5 | 3 |

| Physical properties of molding material | | | | | | | |
|---|---|---|---|---|---|---|---|
| | Loss factor η (20 °C) | | | 0.226 | 0.238 | 0.219 | 0.232 |
| | Melt flow rate (g/10 min) | | | 648 | 595 | 330 | 207 |
| | Moldability | | | A | A | B | B |

### Example 5

95 % by mass of Vibration Damping Material α1 and 5 % by mass of polyethylene (NOVATEC PE LJ803, Nippon Polyethylene Corporation) were mixed to obtain a molding material. Physical properties of the obtained molding material are shown in Table 3.

### Example 6

95 % by mass of Vibration Damping Material α1 and 5 % by mass of an ethylene vinyl acetate copolymer (EVAFLEX V5773W, manufactured by Du Pont-Mitsui Polychemicals Co., Ltd.) were mixed to obtain a molding material. Physical properties of the obtained molding material are shown in Table 3.

### Example 7

95 % by mass of Vibration Damping Material α1 and 5 % by mass of polyisoprene (NIPOL IR2200, manufactured by Zeon Corporation) were mixed to obtain a molding material. Physical properties of the obtained molding material are shown in Table 3.

### Example 8

95 % by mass of Vibration Damping Material α1 and 5 % by mass of a styrene acrylonitrile copolymer [SANREX SAN-R(S20), manufactured by Techno Polymer Co., Ltd.] were mixed to obtain a molding material. Physical properties of the obtained molding material are shown in Table 3.

**Table 3**

| | | | Example 5 | Example 6 | Example 7 | Example 8 |
|---|---|---|---|---|---|---|
| Composition of Vibration Damping Material α1 (% by mass) | | | | | | |
| | Polyester resin (X) | | 22.2 | 22.2 | 22.2 | 22.2 |
| | Titanium oxide (Y) | | 17.5 | 17.5 | 17.5 | 17.5 |
| | Mica flake (Z) | | 60.0 | 60.0 | 60.0 | 60.0 |
| | Carbon powder | | 0.3 | 0.3 | 0.3 | 0.3 |

| Composition of molding material (% by mass) | | | | | | |
|---|---|---|---|---|---|---|
| | Vibration Damping Material α1 | | 95 | 95 | 95 | 95 |
| | Modifier | | | | | |
| | | Polyethylene (LJ803) | 5 | | | |
| | | Ethylene vinyl acetate (V5773W) | | 5 | | |
| | | Polyisoprene (IR2200) | | | 5 | |
| | | Styrene acrylonitrile copolymer (SAN-R) | | | | 5 |

| Physical properties of molding material | | | | | | |
|---|---|---|---|---|---|---|
| | Loss factor η (20 °C) | | 0.193 | 0.239 | 0.229 | 0.205 |
| | Melt flow rate (g/10 min) | | 17 | 26 | 123 | 16 |
| | Moldability | | A | A | A | A |

### Comparative Examples 7 to 8

The Vibration Damping Material α1 obtained in Comparative Example 1 and polypropylene (a trade name: NOVATEC PP·MG03B, manufactured by Nippon Polypropylene Corporation) were mixed in a ratio shown in Table 4, thereby obtaining molding materials. Results of physical property measurement of the obtained molding materials are shown in Table 4.

### Comparative Example 9

95 % by mass of Vibration Damping Material α1 and 5 % by mass of polyvinylidene fluoride (KUREHA KF POLYMER #1000, manufactured by Kureha Corporation) were mixed to obtain a molding material. Physical properties of the obtained molding material are shown in Table 4.

### Comparative Example 10

95 % by mass of Vibration Damping Material α1 and 5 % by mass of polystyrene (PSJ POLYSTYRENE GPPS679, manufactured by PS Japan Corporation) were mixed to obtain a molding material. Physical properties of the obtained molding material are shown in Table 4.

### Comparative Example 11

95 % by mass of Vibration Damping Material α1 and 5 % by mass of an acrylonitrile butadiene styrene copolymer (UMG-ABS Fu23, manufactured by UMG-ABS, Ltd.) were mixed to obtain a molding material. Physical properties of the obtained molding material are shown in Table 4.

**Table 4**

| | | | Comparative Example 7 | Comparative Example 8 | Comparative Example 9 | Comparative Example 10 | Comparative Example 11 |
|---|---|---|---|---|---|---|---|
| Composition of Vibration Damping Material α1 (% by mass) | | | | | | | |
| | Polyester resin (X) | | 22.2 | 22.2 | 22.2 | 22.2 | 22.2 |
| | Titanium oxide (Y) | | 17.5 | 17.5 | 17.5 | 17.5 | 17.5 |
| | Mica flake (Z) | | 60.0 | 60.0 | 60.0 | 60.0 | 60.0 |
| | Carbon powder | | 0.3 | 0.3 | 0.3 | 0.3 | 0.3 |

| Composition of molding material (% by mass) | | | | | | | |
|---|---|---|---|---|---|---|---|
| | Vibration Damping Material α1 | | 98 | 99 | 95 | 95 | 95 |
| | Modifier | | | | | | |
| | | Polypropylene (MG03B) | 2 | 1 | | | |
| | | Polyvinylidene fluoride (KF POLYMER #1000) | | | 5 | | |
| | | Polystyrene (GPPS 679) | | | | 5 | |
| | | ABS (UMG-SBS Fu23) | | | | | 5 |

| Physical properties of molding material | | | | | | | |
|---|---|---|---|---|---|---|---|
| | Loss factor η (20 °C) | | 0.238 | 0.251 | 0.223 | 0.212 | 0.227 |
| | Melt flow rate (g/10 min) | | *2 | *2 | 6 | 21 | 12 |
| | Moldability | | C | C | B | B | B |

### Comparative Example 12

95 % by mass of Vibration Damping Material α1 and 5 % by mass of polycarbonate (IUPILON H-3000R, manufactured by Mitsubishi Engineering-Plastics Corporation) were mixed to obtain a molding material. Physical properties of the obtained molding material are shown in Table 5.

### Comparative Example 13

95 % by mass of Vibration Damping Material α1 and 5 % by mass of polybutylene terephthalate (NOVADURAN 5010R5, manufactured by Mitsubishi Engineering-Plastics Corporation) were mixed to obtain a molding material. Physical properties of the obtained molding material are shown in Table 5.

### Comparative Example 14

95 % by mass of Vibration Damping Material α1 and 5 % by mass of polyphenylene sulfide (FORTRON 0220A9, manufactured by Polyplastics Co., Ltd.) were mixed to obtain a molding material. Physical properties of the obtained molding material are shown in Table 5.

### Comparative Example 15

95 % by mass of Vibration Damping Material α1 and 5 % by mass of polyacetal (IUPITAL F30-03, manufactured by Mitsubishi Engineering-Plastics Corporation) were mixed to obtain a molding material. Physical properties of the obtained molding material are shown in Table 5.

**Table 5**

| | | | Comparative Example 12 | Comparative Example 13 | Comparative Example 14 | Comparative Example 15 |
|---|---|---|---|---|---|---|
| Composition of Vibration Damping Material α1 (% by mass) | | | | | | |
| | Polyester resin (X) | | 22.2 | 22.2 | 22.2 | 22.2 |
| | Titanium oxide (Y) | | 17.5 | 17.5 | 17.5 | 17.5 |
| | Mica flake (Z) | | 60.0 | 60.0 | 60.0 | 60.0 |
| | Carbon powder | | 0.3 | 0.3 | 0.3 | 0.3 |

| Composition of molding material (% by mass) | | | | | | |
|---|---|---|---|---|---|---|
| | Vibration Damping Material α1 | | 95 | 95 | 95 | 95 |
| | Modifier | | | | | |
| | | Polycarbonate (H-3000R) | 5 | | | |
| | | Polybutylene terephthalate (5010R5) | | 5 | | |
| | | Polyphenylene sulfide (0220A9) | | | 5 | |
| | | Polyacetal (F30-03) | | | | 5 |

| Physical properties of molding material | | | | | | |
|---|---|---|---|---|---|---|
| | Loss factory η (20 °C) | | 0.176 | *1 | *1 | 0.223 |
| | Melt flow rate (g/10 min) | | *2 | *2 | *2 | *2 |
| | Moldability | | B | *3 | *3 | C |

### Comparative Example 16

95 % by mass of Vibration Damping Material α1 and 5 % by mass of polymethyl methacrylate (ACRYPET MF001, manufactured by Mitsubishi Rayon Co., Ltd.) were mixed to obtain a molding material. Physical properties of the obtained molding material are shown in Table 6.

### Comparative Example 17

95 % by mass of Vibration Damping Material α1 and 5 % by mass of polyvinyl chloride (KVC 938U-H05, manufactured by Showa Kasei Co. , Ltd.) were mixed to obtain a molding material. Physical properties of the obtained molding material are shown in Table 6.

### Comparative Example 18

95 % by mass of Vibration Damping Material α1 and 5 % by mass of chlorinated polyethylene (ELASLEN 303B, manufactured by Showa Denko K.K.) were mixed to obtain a molding material. Physical properties of the obtained molding material are shown in Table 6.

### Comparative Example 19

95 % by mass of Vibration Damping Material α1 and 5 % by mass of polyamide (NOVAMID 3010N5-SL4, manufactured by Mitsubishi Engineering-Plastics Corporation) were mixed to obtain a molding material. Physical properties of the obtained molding material are shown in Table 6.

**Table 6**

| | | | Comparative Example 16 | Comparative Example 17 | Comparative Example 18 | Comparative : Example 19 |
|---|---|---|---|---|---|---|
| Composition of Vibration Damping Material α1 (% by mass) | | | | | | |
| | Polyester resin (X) | | 22.2 | 22.2 | 22.2 | 22.2 |
| | Titanium oxide (Y) | | 17.5 | 17.5 | 17.5 | 17.5 |
| | Mica flake (Z) | | 60.0 | 60.0 | 60.0 | 60.0 |
| | Carbon powder | | 0.3 | 0.3 | 0.3 | 0.3 |

| Composition of molding material (% by mass) | | | | | | |
|---|---|---|---|---|---|---|
| | Vibration Damping Material α1 | | 95 | 95 | 95 | 95 |
| | Modifier | | | | | |
| | | Polymethyl methacrylate (MF001) | 5 | | | |
| | | Polyvinyl chloride (938U-H05) | | 5 | | |
| | | Chlorinated polyethylene (ELASLEN 303B) | | | 5 | |
| | | Polyamide (3010N5-SL4) | | | | 5 |

| Physical properties of molding material | | | | | | |
|---|---|---|---|---|---|---|
| | Loss factor η (20 °C) | | 0.215 | 0.188 | 0.262 | *1 |
| | Melt flow rate (g/10 min) | | 9 | 31 | 6 | *2 |
| | Moldability | | B | B | B | *3 |

As shown in Table 1, the molding materials of Examples 1 to 4 composed of a mixture of the Vibration Damping Material α1 and a modifier for enhancing fluidity (polypropylene) are high in the melt flow rate and good in the fluidity as compared with the Vibration Damping Material α1 of Comparative Example 1. Also, the molding materials of Examples 1 to 4 are enhanced in the moldability (shape and mold release properties) as compared with the Vibration Damping Material α1 of Comparative Example 1. It is understood that the Vibration Damping Material α1 of Comparative Example 1 does not have fluidity and cannot be subjected to injection molding; whereas the molding materials of Examples 1 to 4 can be subjected to injection molding, and a molded article can be easily obtained therefrom.

Also, as shown in Table 2, it is understood that in the case of using the titanium oxide-free Vibration Damping Material α1, the melt flow rate is high, or good moldability is not obtained.
As shown in Table 3, it is understood that in the case of using, as the modifier, a polyethylene resin, a polyisoprene resin, an ethylene-vinyl acetate copolymer resin, or a styrene-acrylonitrile copolymer resin, excellent moldability is obtained similar to the case of the polypropylene resin.

From Comparative Examples 7 and 8 in Table 4, it is understood that in the case of using a polypropylene resin or the like as the modifier, when its content is not more than 2 % by mass, good moldability is not obtained. Also, from Comparative Example 9, et seq. in Table 4 and Tables 5 and 6, it is understood that in a polyvinylidene fluoride resin, a polystyrene resin, an acrylonitrile butadiene styrene copolymer resin, a polycarbonate resin, a polybutylene terephthalate resin, a polyphenylene sulfide resin, and a polyacetal resin, good moldability and the like are not obtained.

### INDUSTRIAL APPLICABILITY

Since the molding material of the present invention has excellent vibration damping properties and exhibits excellent molding processability, from which a molded article is easily manufactured without requiring a complicated process such as lamination of the vibration damping material, etc., it can be suitably used for areas where vibration occurs, as parts and housings of electric or electronic instruments such as personal computers, OA instruments, AV instruments, mobile phones, etc., optical instruments, precision instruments, toys, household or office electric appliances, and the like, and furthermore, parts of cars, airplanes, ships, and the like.

## Claims

1. A molding material comprising (α) a vibration damping material composed of a resin composition constituted of (X) a polyester resin composed of a dicarboxylic acid component constituent unit and a diol component constituent unit having (Y) titanium dioxide and (Z) a mica flake dispersed therein; and (β) a modifier for improving fluidity, wherein
(1) in the polyester resin (X), a ratio of a total sum of a number (A₁) of the dicarboxylic acid component constituent unit having an odd carbon atom number in a main chain thereof and a number (B₁) of the diol component constituent unit having an odd carbon atom number in a main chain thereof to a total sum of a number (A₀) of all dicarboxylic acid component constituent units and a number (B₀) of all diol component constituent units, [(A₁+ B₁)/(A₀ + B₀)], is in the range of from 0.5 to 1.0;
(2) in the vibration damping material (α), a mass ratio of the polyester resin (X), the titanium dioxide (Y) and the mica flake (Z), (X:Y:Z), is in the range of (15 to 40):(5 to 30) : (30 to 80);
(3) a content of the vibration damping material (α) is from 50 to 97 % by mass;
(4) the modifier (β) for enhancing fluidity is at least one member selected from the group consisting of a polyethylene resin, a polypropylene resin, a polyisoprene resin, an ethylene-vinyl acetate copolymer resin, and a styrene-acrylonitrile copolymer resin; and
(5) a melt flow rate as measured using a melt indexer under a condition at 200 °C and at a load of 10 kg in an orifice diameter of 2 mm is in the range of from 400 to 10 g/10 min.

2. The molding material according to claim 1, wherein the content of the vibration damping material (α) is in the range of from 90 to 97 % by mass.

3. A molded article obtained by molding the molding material according to claim 1 or 2.
